Europäisches Patentamt

European Patent Office

Office européen des brevets

(11) Veröffentlichungsnummer: **0 417 665 A2**

(12) **EUROPÄISCHE PATENTANMELDUNG**

(21) Anmeldenummer: 90117291.6

(22) Anmeldetag: 07.09.90

(51) Int. Cl.5: **G01S 17/87, G01S 17/42**

(30) Priorität: 09.09.89 DE 3930109

(43) Veröffentlichungstag der Anmeldung:
20.03.91 Patentblatt 91/12

(84) Benannte Vertragsstaaten:
AT BE CH DE DK ES FR GB GR IT LI LU NL SE

(71) Anmelder: **PEPPERL + FUCHS GMBH**
**Königsberger Allee 87**
**W-6800 Mannheim-Schönau(DE)**

(72) Erfinder: **Olbrecht, Thorsten**
**Bechtheimer Strasse 1**
**W-6804 Ilvesheim(DE)**

(74) Vertreter: **Mierswa, Klaus, Dipl.-Ing.**
**Friedrichstrasse 171**
**W-6800 Mannheim 24(DE)**

(54) Verfahren und Vorrichtung zur optischen Positions- und/oder Fahrtrichtungsbestimmung eines fahrerlosen eigen/angetriebenen Fahrzeugs in der x-y-Ebene.

(57) Die Erfindung betrifft ein Verfahren zur optischen Positions- und/oder Fahrtrichtungsbestimmung mindestens eines fahrerlosen Fahrzeugs (F) in der x-y-Ebene, mit einer auf dem Fahrzeug montierten Sende- und Empfangsoptik (3) zum Erzeugen eines gebündelten Abtastlichtstrahls und Empfangen des reflektierten Strahls, das von vom Fahrzeug getrennt angeordneten Retroreflektoren ($R_1, R_2, R_3$) auf die Empfangsoptik reflektiert wird und mit einer Auswerte- und Recheneinrichtung für die Verarbeitung der von der Empfangsoptik gelieferten elektrischen Signale, wobei die Sende- und Empfangsoptik in der x-y-Ebene synchron und zyklisch einen vorgegebenen Winkelbereich ($\alpha$) durchläuft. Der Abtaststrahl wird auf wenigstens drei Retroreflektoren ($R_1, R_2, R_3$) gelenkt, die auf einer Geraden liegen und deren Abstände (d) voneinander gleich und bekannt sind und deren Lage im x-y-Koordinatensystem festgelegt ist. Mit der Empfangsoptik (3) erfolgt die Erfassung der momentanen Abtastwinkel ($\alpha_1, \alpha_2, \alpha_3$) in bezug auf eine definierte Längsachse (1) des Fahrzeugs (F) zu den drei Retroreflektoren ($R_1, R_2, R_3$). Mit den momentanen Abtastwinkeln ($\alpha_1, \alpha_2, \alpha_3$) und den Abständen (d) der Retroreflektoren ($R_1, R_2, R_3$) voneinander werden die Entfernungen ($b_1, b_2, b_3$) der Empfangsoptik (3) von den Retroreflektoren errechnet, womit das durch die beiden äußeren Retroreflektoren ($R_1, R_3$) und die Sende- und Empfangsoptik (3) aufgespannte Dreieck berechnet ist und damit die Koordinaten ($X_F, Y_F$) des Fahrzeugs (F) und der Fahrzeugwinkel ($\Psi$) des Fahrzeugs (1) bestimmt sind, beispielsweise der durch die Längsachse (1) des Fahrzeugs (F) und der x-Achse des Koordinatensystems aufgespannte Winkel ($\Psi$).

EP 0 417 665 A2

Fig. 2

2

## TECHNISCHES GEBIET:

Die Erfindung betrifft ein Verfahren zur optischen Positions- und/oder Fahrtrichtungsbestimmung eines fahrerlosen eigen angetriebenen Fahrzeugs (F) in der x-y-Ebene gemäß dem Oberbegriff des Anspruchs 1 und eine Vorrichtung zur Durchführung des Verfahrens gemäß dem Oberbegriff des Anspruchs 3.

Stand der Technik:

Für die Abstandsüberwachung eines fahrerlosen eigen angetriebenen Fahrzeugs in der x-y-Ebene ist es bekannt, dasselbe mit einer Lichtquelle und einer Empfangsoptik auszurüsten,wobei die Lichtquelle einen gebündelten Abtaststrahl auf zwei Retroreflektoren zu werfen imstande ist und das reflektierte Licht von einer Empfangsoptik empfangen wird. Eine Auswerte- und Recheneinrichtung kann dann den Abstand des Fahrzeugs von den Retroreflektoren berechnen. Der Ort des Fahrzeugs ist jedoch mittels der Verwendung von zwei Retroreflektoren nicht eindeutig zu bestimmen, sondern die Verwendung von zwei Retroreflektoren führt zu einer Mehrdeutigkeit. Ebenso läßt sich mittels der bekannten Vorrichtung eine Bestimmung der Fahrtrichtung nicht durchführen.

Durch die GB 2143395 A ist ein Fahrzeugführungs- und Kontrollsystem bekanntgeworden, bei dem ein oder mehrere eigen angetriebene Fahrzeuge innerhalb einer vorgegebenen Fläche fahrerlos bewegbar sind. Die Vorrichtung benötigt eine Basisstation und eine Kommunikationsverbindung, beispielsweise Radiowellen oder Infrarotlicht, die in der Decke angeordnet ist und eine vorgegebene Fläche für die Fahrzeuge begrenzt. Rings der Fläche ist eine Mehrzahl von Reflektoren angebracht, die von einer Sende- und Empfangsoptik auf dem Fahrzeug angesteuert werden können. Alle Reflektoren enthalten unterschiedliche Codes, die mittels des vom Fahrzeug aus gesendeten Lichtstrahls gelesen werden und so dem Fahrzeug angeben, wo es sich befindet. Damit findet keine separate Berechnung der Position des Fahrzeugs innerhalb des Fahrzeugs statt, sondern die Position wird dem Fahrzeug aufgrund der unterschiedlichen Codes der unterschiedlichen Reflektoren mitgeteilt.

Die DE 3237439 C2 beinhaltet ein Laufsteuersystem für ein automatisch fahrendes Fahrzeug mit einer fotoelektrischen Einrichtung, die wenigstens zwei lichtemittierende und zwei lichtempfangende Elemente und zwei Reflektoren aufweist, wobei die Steuerschaltung ein Steuersignal an eine Fahrzeugsteuerung abgibt, wenn reflektiertes Licht empfangen wird. Die beiden Reflektoren sind an einer vorgegebenen Position vorhanden, wobei die Steuerschaltung dann ein Bewegungsänderungssignal an die Fahrzeugsteuerung abgibt, wenn die von den lichtempfangenen Elementen abgegebenen Signale übereinstimmen. Beliebige Fahrten eines eigen angetriebenen Fahrzeugs in der x-y-Ebene sind nicht möglich, sondern nur solche auf einem definierten Führungsweg.

Die nicht vorveröffentlichte DE 38 21 892 C1 beinhaltet ein Verfahren und eine Vorrichtung zur Positionsmessung von Container-Umsetzfahrzeugen mit einem Sensorsystem, mit dem die mit Reflektoren ausgerüstete Umgebung des Fahrzeugs als Bezug zur Vermessung vom Fahrzeug aus benutzt wird. Während der Fahrt und insbesondere im Stand wird kontinuierlich mit einem rotierenden Laser-Entfernungsmesser die Umgebung vom Fahrzeug aus vermessen, wobei die Positionen der Reflektoren im Fahrzeugrechner gespeichert sind. Die Position des Fahrzeugs wird aus den gemessenen Polarkoordinaten zu den Reflektoren bestimmt und umcodiert auf Lagerplätze, die dem Lagerrechner per Funk übertragen werden können.

Technische Aufgabe:

Der Erfindung liegt die Aufgabe zugrunde, ein Verfahren zur optischen Positions-und/oder Fahrtrichtungsbestimmung mindestens eines fahrerlosen eigenangetriebenen Fahrzeugs in einem gegebenen x-y-Koordinatensystem zu schaffen, mit welchem eine eindeutige Lage- und Richtungsbestimmung des Fahrzeugs in diesem x-y-Koordinatensystem möglich sein soll.

Darstellung der Erfindung und deren Vorteile:

Die Lösung dieser Aufgabe besteht erfindungsgemäß darin, daß verfahrensmäßig
a) der Abtaststrahl auf wenigstens drei Retroreflektoren ($R_1$,$R_2$,$R_3$) gelenkt wird, die auf einer Geraden liegen und deren Abstände (d) voneinander gleich und bekannt sind und deren Lage im x-y-Koordinatensystem festgelegt ist

b) mit der Empfangsoptik (3) die Erfassung der momentanen Abtastwinkel ($\alpha_1,\alpha_2,\alpha_3$) in Bezug auf eine definierte Längsachse (1) des Fahrzeugs (F) zu den drei Retroreflektoren ($R_1,R_2,R_3$) erfolgt und

c) mit den momentanen Abtastwinkeln ($\alpha_1,\alpha_2,\alpha_3$) und den Abständen (d) der Retroreflektoren ($R_1,R_2,R_3$) voneinander die Entfernungen ($b_1,b_2,b_3$) der Empfangsoptik (3) von den Retroreflektoren errechnet werden, womit das durch die beiden äußeren Retroreflektoren ($R_1,R_3$) und die Sende- und Empfangsoptik (3) aufgespannte Dreieck berechnet werden kann und damit die Koordinaten ($X_F$, $Y_F$) des Fahrzeugs (F) bestimmt sind.

Eine Vorrichtung zur Durchführung des erfindungsgemäßen Verfahrens ist durch folgende Merkmale gekennzeichnet:

a) es sind drei Retroreflektoren ($R_1,R_2,R_3;4,4',4'';9,9',9''$), deren Lage in einem gegebenen x-y-Koordinatensystem bekannt bzw. berechenbar ist, vorhanden und dem Fahrzeug (F;1,2) zugeordnet, die voneinander gleiche und bekannte Abstände (d) haben und auf einer Geraden (14,14') angeordnet sind, die in der x-y-Ebene des Fahrzeugs liegt, wobei das x-y-Koordinatensystem sowohl als fest stehend oder dem sich bewegenden Fahrzeug fest zugeordnet ist

b) die Retroreflektoren ($R_1,R_2,R_3;4,4',4'';9,9',9''$) liegen innerhalb eines durch einen vorgegebenen Winkebereich ($\alpha$) aufgespannten Sektors, der vom Abtaststrahl der Sende- und Empfangsoptik (3) überstrichen wird,

c) die Sende- und Empfangsoptik (3) weist eine Winkelerfassungseinrichtung (12) für die Erfassung der momentanen Winkel ($\alpha_1,\alpha_2,\alpha_3$) des Winkelbereichs ($\alpha$) in bezug auf die Retroreflektoren ($R_1,R_2,R_3;4,4',4'';9,9',9''$) auf.

Weitere vorteilhafte Ausgestaltungen der Erfindung sind in den Unteransprüchen gekennzeichnet.

Das erfindungsgemäße Verfahren besitzt den Vorteil, daß mittels desselben der Ort eines Fahrzeugs in einem gegebenen x-y-Koordinatensystem eindeutig angegeben werden kann. Darüber hinaus besitzt das Verfahren den Vorteil, daß mittels desselben auch der Fahrtrichtungswinkel $\Psi$ des Fahrzeugs und somit die Richtung des Fahrzeugs, beispielsweise die Richtung der Längsachse desselben, bestimmt werden kann. Deshalb lassen sich mit Hilfe des erfindungsgemäßen Verfahrens fahrerlose eigen angetriebene Fahrzeuge konstruieren, die eigen gesteuert in einem gegebenen x-y-Koordinatensystem fahren können, die eigene Kurvenfahrten erkennen und die insbesondere das Fahrverhalten von nachfolgenden oder vorausfahrenden Fahrzeugen erkennen und darauf geeignet reagieren können, beispielsweise durch Auslösen eines Ausweichmanövers oder eines Brems- oder Beschleunigungsvorgangs.

Aufgrund der Möglichkeit der Bestimmung der Entfernungen der Retroreflektoren zur Empfangsoptik und des Fahrtrichtungswinkels $\Psi$ eines mit der erfindungsgemäßen Vorrichtung ausgestatteten Fahrzeugs werden somit Abstände, Kurvenfahrten und ein seitlicher Versatz zweier aufeinanderfolgender Fahrzeuge zueinander richtig interpretiert. Das gegebene x-y-Koordinatensystem kann somit entweder als feststehend im Raum, beispielsweise die Wände einer Lagerhalle, an denen die Retroreflektoren montiert sind, betrachtet werden oder das Koordinatensystem ist dem sich bewegenden Fahrzeug fest zugeordnet, so daß die Koordinaten der Retroreflektoren eines jeden Fahrzeugs innerhalb eines gegebenen festen x-y-Koordinatensystems oder eines x-y-Fahrzeug-Koordinatensystems eines beweglichen Fahrzeugs gegeben und für jedes Fahrzeug die Koordinaten des auftauchenden benachbarten Fahrzeugs erfindungsgemäß berechenbar sind. Vorzugsweise weisen sämtliche Retroreflektoren verschiedener Fahrzeuge eine im jeweiligen Fahrzeug-Koordinatensystem identische Lage auf. Ebenso sind natürlich das im Raum festliegende Koordinatensystem und das bewegliche Fahrzeug-Koordinatensystem des beweglichen Fahrzeugs miteinander kombinierbar. Die x-y-Hauptebene des Fahrzeugs, die vorzugsweise die Fahrebene ist, liegt vorzugsweise im x-y-Koordinatensystem.

Kurzbezeichnung der Zeichnung, in der zeigen:

Figur 1 eine prinzipielle Darstellung zur Ableitung des erfindungsgemäßen Verfahrens in der x-y-Ebene

Figur 2 eine Vorrichtung mit einer Sende- und Empfangsoptik, die synchron und zyklisch einen vorgegebenen Abtastwinkel $\alpha$ durchläuft und

Figuren 3a bis d vier Darstellungen von vier verschiedenen Positionen von jeweils zwei Fahrzeugen zueinander.

Wege zur Ausführung der Erfindung:

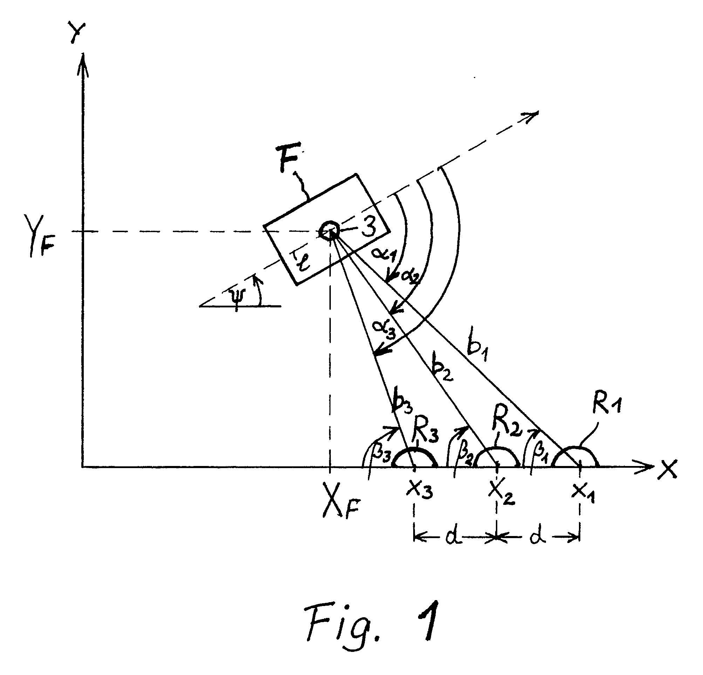

Das erfindungsgemäße Verfahren wird anhand der prinzipiellen Darstellung der Figur 1 erläutert. Ein Fahrzeug F befindet sich in einem x-y-Koordinatensystem; drei Retroreflektoren $R_1$, $R_2$ und $R_3$, deren Lage in diesem x-y-Koordinatensystem bekannt ist, sind in einer Reihe auf der x-Achse an den bekannten Positionen $X_1$, $X_2$, $X_3$ angeordnet; der Abstand der Retroreflektoren untereinander ist gleich und beträgt jeweils d. Bezüglich der Längsachse 1 des Fahrzeugs F werden um den Bezugspunkt $X_F$, $Y_F$ mittels einer Winkelerfassungseinrichtung einer Sende- und Empfangsoptik 3 die momentanen Winkel $\alpha_1$ $\alpha_2$, $\alpha_3$ des Abtaststrahls der Sende-und Empfangsoptik 3 innerhalb eines vorgegebenen Winkelbereichs $\alpha$, der der Scanwinkel der Sende- und Empfangsoptik 3 ist, gemessen. Anhand dieser Winkel $\alpha_1$, $\alpha_2$, $\alpha_3$ der bekannten Lage der drei Retroreflektoren $R_1$, $R_2$, $R_3$ auf der x-Achse und des bekannten Abstandes d der Retroreflektoren voneinander lassen sich die Koordinaten $X_F$, $Y_F$ und der Fahrzeugwinkel $\Psi$ des Fahrzeugs F, der durch die Längsachse des Fahrzeugs F und beispielsweise der x-Achse des Koordinatensystems aufgespannt wird, eindeutig ermitteln.

Würden nur zwei Retroreflektoren verwendet, zum Beispiel $R_1$, $R_3$, so gäbe es beliebig viele Orte $X_F$, $Y_F$, $X_{F'}$, $Y_{F'}$,...., die sich mit den bekannten Größen $\alpha_1$, $\alpha_3$ und 2•d berechnen lassen. Erst bei der Verwendung von wenigstens drei Retroreflektoren ist die Bestimmung der Koordinaten $X_F$, $Y_F$ eindeutig.

Mit den gemessenen Winkeln $\alpha_1$, $\alpha_2$, $\alpha_3$, der bekannten Lage der drei Retroreflektoren $R_1$, $R_2$, $R_3$ auf der x-Achse und dem gegebenen Abstand d können die Längen der Abtaststrahlen bzw. die Entfernungen $b_1$, $b_2$, $b_3$ der Empfangsoptik 3 von den Retroreflektoren $R_1$, $R_2$, $R_3$ errechnet werden.

Damit ist das Dreieck $|b_1|b_3|2•d|$ eindeutig bestimmt; seine Lage ist im gegebenen x-y-Koordinatensystem durch die bekannten Koordinaten $X_1$, $X_2$, $X_3$ der Retroreflektoren $R_1$, $R_2$, $R_3$ gegeben, womit auch die Koordinaten $X_F$, $Y_F$ des Fahrzeugs F eindeutig gegeben sind.

Zur Bestimmung des Dreiecks, d.h. der Entfernungen $b_1$, $b_2$, $b_3$ zur Ermittlung der Koordinaten $X_F$, $Y_F$ des Fahrzeugs F, aus den momentanen Winkeln $\alpha_1$, $\alpha_2$, $\alpha_3$ können auch die Differenzwinkel $\gamma_1$, $\gamma_2$ aus den Winkeln $\alpha_1$, $\alpha_2$, $\alpha_3$ untereinander gebildet werden.

Die Koordinaten $X_F$, $Y_F$ des Fahrzeugs F lassen sich beispielsweise angeben durch die Gleichungen:

$$X_F = \frac{(b_3)^2 - (b_1)^2 + (x_1)^2 - (x_3)^2}{2 \cdot 2 \cdot d} \quad \text{und} \quad Y_F = \sqrt{(b_3)^2 - (x_3 - X_F)^2} \quad (\text{Wurzel}).$$

Zur Ermittlung des Fahrzeugwinkels $\Psi$, definiert zum Beispiel als der Winkel $\Psi$, gebildet zwischen der Längsachse 1 des Fahrzeugs F und der x-Achse des x-yKoordinatensystems, muß zum Beispiel der Winkel $\beta_1$ berechnet werden, was aus den berechneten Entfernungen und den berechneten Koordinaten $X_F$, $Y_F$ möglich ist; beispielsweise gemäß folgender Beziehung $\Psi = \alpha_1 - \beta_1 = \alpha_1 - \arcsin \{Y_F/b_1\}$ läßt sich der Winkel $\Psi$ berechnen.

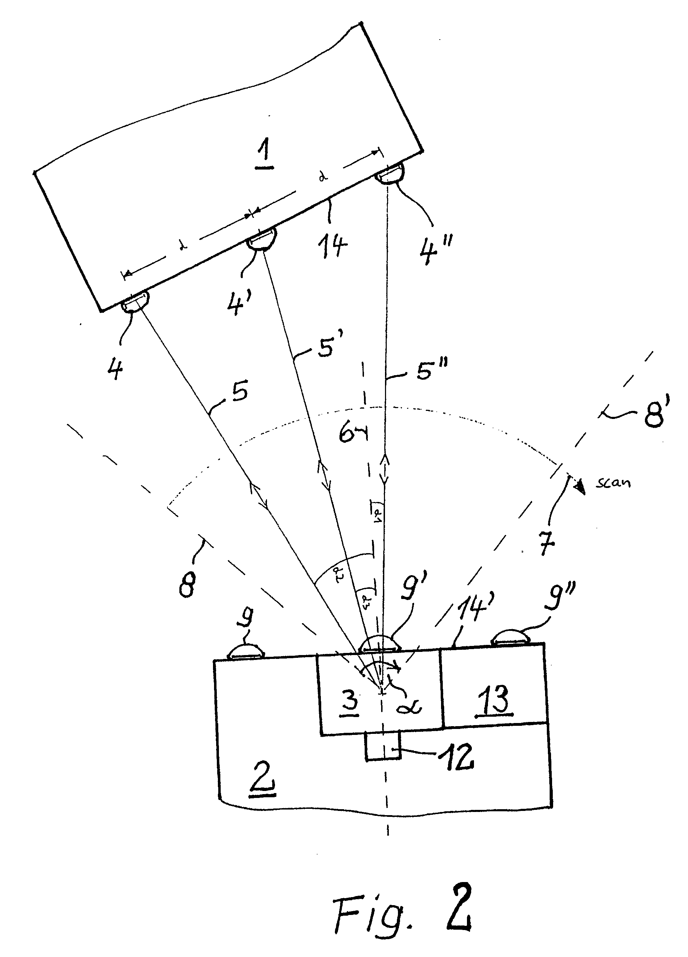

Die Figur 2 zeigt beispielsweise zwei erfindungsgemäße Fahrzeuge 1,2, die beide mit je einer Vorrichtung versehen sein können, die nach dem oben beschriebenen erfindungsgemäßen Verfahren arbeiten.

Innerhalb des Fahrzeugs 2, welches hier das peilende Fahrzeug ist, ist eine Sende- und Empfangsoptik 3 angeordnet, die einen Sender von elektromagnetischen Wellen aufweist, vorzugsweise eine Lichtquelle, die einen gebündelten Abtaststrahl auszusenden imstande ist, und eine Empfangsoptik mit einer geeigneten Empfangsdiode oder Empfangseinrichtung umfaßt zur Umwandlung des optischen Signals in ein elektrisches Signal. Die Lichtquelle kann zum Beispiel in vorteilhafter Weise eine Laser-Lichtquelle sein. Der von der Sende-und Empfangsoptik 3 gesendete Abtaststrahl durchläuft einen bestimmten Abtastwinkelbereich $\alpha$, was durch eine geeignete Drehmechanik oder Optik (Spiegelrad) zu bewerkstelligen ist und was durch den Drehrichtungspfeil 7 von links nach rechts dargestellt ist. Der Abtastwinkelbereich $\alpha$, der vom gesendeten Abtaststrahl zyklisch durchlaufen wird, ist durch die Begrenzungsstrahlen 8, 8' begrenzt gezeigt, die einen Sektor des Winkel $\alpha$ aufspannen, innerhalb desselben ein Objekt erfaßt werden kann.

Das Objekt ist ein zweites Fahrzeug 1, welches hier das angepeilte Fahrzeug ist, mit drei Retroreflektoren 4, 4', 4'', die an einer Fahrzeugseite angeordnet sind und auf einer Geraden 14 liegen, die vorzugsweise in der Fahrebene des Fahrzeugs 1 und somit im x-y-Fahrzeug-Koordinatensystem des Fahrzeugs 1 liegt. Die drei Retroreflektoren 4, 4', 4'' haben vorzugsweise voneinander den gleichen, für das peilende Fahrzeug 2, bekannten Abstand d. Diese Retroreflektoren 4, 4',4'' stehen somit in einem bestimmten Bezug zum die Retroreflektoren 4, 4',4'' detektierenden Fahrzeug 2. Die Lichtquelle der Sende-und Empfangsoptik 3 des Fahrzeugs 2 sendet einen Abtaststrahl aus, der nacheinander die Retroreflektoren 4, 4', 4'' überstreicht, wobei jeder einzelne derselben einen reflektierten Lichtstrahl 5, 5',5'' unter demselben Winkel auf die Empfangoptik der Sende-und Empfangsoptik 3 reflektiert, was durch den Doppelpfeil auf jedem Lichtstrahl 5,5',5'' angedeutet ist.

An die Sende-und Empfangsoptik 3 angeschlossen ist eine Winkelerfassungseinrichtung 12, beispielsweise ein elektronischer Winkelmesser, die die momentanen Abtastwinkel $\alpha_1$, $\alpha_2$, $\alpha_3$ bezüglich der reflektierten Lichtstrahlen 5, 5',5'' von einer gemeinsamen Nullstellung bezüglich der Längsachse 6 des Fahrzeugs 2 bzw. der optischen Längsachse 6 der Sende-und Empfangsoptik 3 mißt und speichert. Nach einem durchlaufenen Zyklus werden in zeitlicher Reihenfolge nacheinander die momentanen Abtastwinkel $\alpha_1$, $\alpha_2$, $\alpha_3$ erhalten. Die Sende-und Empfangsoptik 3 und die Winkelerfassungseinrichtung 12 sind mit einer Auswerte-, Speicher- und Recheneinrichtung 13 verbunden.

Am Fahrzeug 2 sind ebenfalls Retroreflektoren 9, 9', 9'' seitlich auf einer Geraden 14', die vorzugsweise in der Fahrebene des Fahrzeugs 2 und somit im x-y-Fahrzeug-Koordinatensystem des Fahrzeugs 2 liegt, angeordnet, die in einem bestimmten Bezug beispielsweise mit einer (nicht gezeigten) gleichen Sende- und Empfangsoptik, Winkelerfassungseinrichtung und Auswerte-, Speicher- und Recheneinrichtung des Fahrzeugs 1 stehen; die Fahrzeuge 1, 2 sind somit vorzugsweise mit gleichen Komponenten ausgestattet, die auf den Fahrzeugen vorzugsweise eine identische Lage aufweisen.

Die Retroreflektoren 9, 9', 9'' liegen auf der x-Achse eines Koordinatensystems und sind lagenmäßig bekannt, wobei dieses Koordinatensystem dem sich bewegenden Fahrzeug 2 fest zugeordnet und ein Fahrzeug-Koordinatensystem ist, dessen Nullpunkt beispielsweise innerhalb der Sende-und Empfangsoptik 3 liegt.

In bezug auf das Fahrzeug 2 können die Retroreflektoren 4, 4', 4'' auch als feststehend bei gegebenen Koordinaten, beispielsweise an einer Wandung, gedacht werden.

Das erkennende, peilende Fahrzeug, das die Retroreflektoren eines anderen, zu detektierenden Fahrzeugs erkennen soll, muß ein fest zugeordnetes Koordinatensystem mit sich führen, in welchem die Koordinaten des zu detektierenden Fahrzeugs bestimmt werden. Diese zu bestimmenden Koordinaten innerhalb des Koordinatensystems des erkennenden Fahrzeugs sind die Koordinaten der Retroreflektoren des zu detektierten Fahrzeugs, die auf einer Gerade liegen, wobei diese Gerade vorzugsweise in der Ebene oder parallel hierzu des Koordinatensystems des erkennenden Fahrzeugs liegt. Damit wei ß das erkennende Fahrzeug bezüglich seiner selbst, wo sich das zu detektierende Fahrzeug befindet.

Die Vorrichtung der Figur 2 besitzt darüber hinaus den Vorteil, einen (theoretisch) beliebig großen Winkelbereich aufzuspannen.

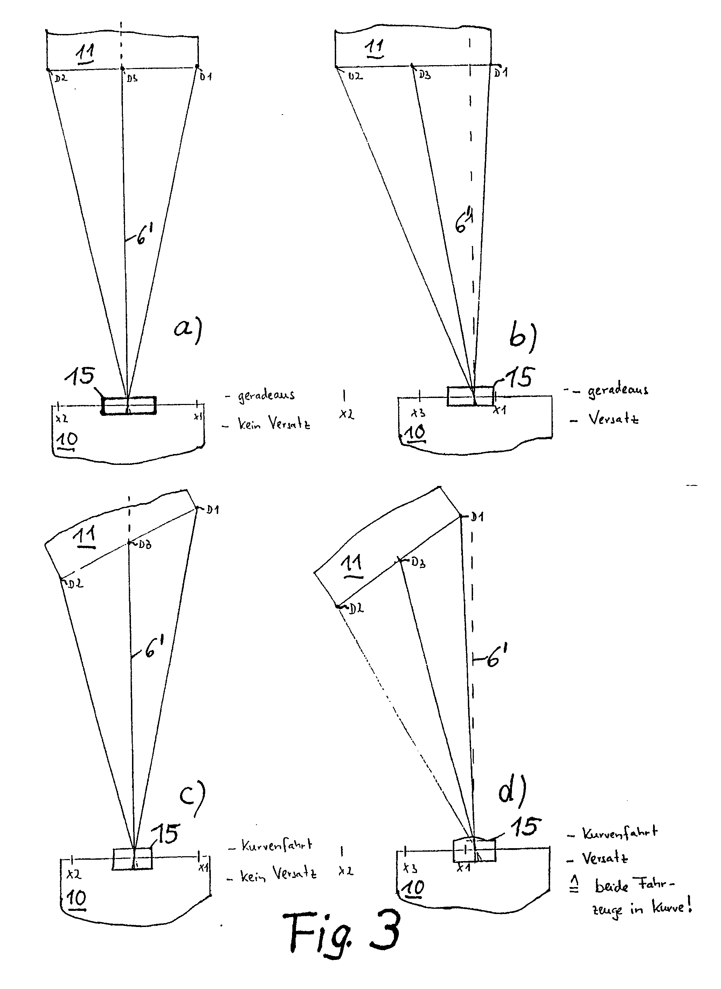

Die Figuren 3 a bis d zeigen verschiedene Positionen der beiden Fahrzeuge 10, 11 zueinander, wobei jeweils das Fahrzeug 10 das peilende, das Fahrzeug 11 das angepeilte Fahrzeug darstellt. Mit der Bezugsziffer 6' ist jeweils die Längsachse des peilenden Fahrzeugs 10 bezeichnet. Im übrigen gelten bezüglich der Koordinatensysteme beider Fahrzeuge und der Koordinaten der Retroreflektoren D1, D2, D3 des angepeilten Fahrzeugs 11 die Ausführungen zu Figur 2.

Figur 3a zeigt den einfachsten Fall der Geradeausfahrt ohne seitlichen Versatz, alle Distanzen sind gleich groß: Die Versatzkomponenten $X_1$, $X_2$ sind vom Betrag gleich und $X_3 = 0$.

Figur 3b zeigt einen seitlichen Versatz der Fahrzeuge, bei dem alle Distanzen zwar gleich sind, die Versatzkomponenten $X_1$, $X_2$, $X_3$ jedoch anzeigen, daß das Fahrzeug 10 sich weiter links befindet.

Figur 3c zeigt eine Kurvenfahrt des Fahrzeugs 10 ohne Versatz, wobei die Distanzen verschieden groß und die Versatzkomponenten $X_1$, $X_2$ vom Betrag gleich sind. Da für die Distanzen $\overline{15D_1}$, $\overline{15D_2}$, $\overline{15D_3}$ gilt: $\overline{15D_1} > \overline{15D_2} > \overline{15D_3}$, befindet sich das Fahrzeug 10 in einer Linkskurve.

Figur 3d zeigt den allgemeinen Fall eines seitlichen Versatzes bei gleichzeitiger Kurvenfahrt an. Dabei zeigen die unterschiedlichen Distanzen eine Kurvenfahrt von Fahrzeug 10 an, während der Versatz aussagt, daß sich das Fahrzeug 11 ebenfalls in einer Kurve befindet. Um eine Kollision zu verhindern, genügt es im allgemeinen, die kleinste Distanz für das Einleiten eines Bremsvorganges heranzuziehen.

In den Figuren 3 a bis 3d ist mit der Bezugsziffer 15 eine Sende- und Empfangsoptik einschließlich Winkelerfassungseinrichtung und Auswerte- und Recheneinrichtung gemäß der Figur 2 bezeichnet.

In vorteilhafter Weise kann zur Bestimmung der Orientierung der Längsachse (1) des Fahrzeugs (F) im Koordinatensystem einer der Winkel ($\beta_1$, $\beta_3$) des durch die beiden äußeren Retroreflektoren ($R_1$, $R_3$) und die Sende- und Empfangsoptik (3) aufgespannten Dreiecks unter Zuhilfenahme desjenigen zugeordneten momentanen Winkels ($\alpha_1$, $\alpha_3$) im Abtastwinkelbereich ($\alpha$) zu demjenigen der äußeren Retroreflektoren ($R_1$, $R_3$), dessen Winkel ($\beta_1$, $\beta_3$) bestimmt worden ist, berechnet werden, beispielsweise der Fahrzeugwinkel ($\Psi$) des Fahrzeugs (F), der durch die Längsachse (1) des Fahrzeugs (F) und die x-Achse des Koordinatensystems aufgespannt wird.

In vorteilhafter Weise sind des weiteren die Retroreflektoren 4, 4', 4''; 9, 9', 9'' an jedem Fahrzeug (1,2) vorn und/oder hinten in gleichen Abständen und Positionen angeordnet.

Gewerbliche Anwendbarkeit:

Das erfindungsgemäße Verfahren und die erfindungsgemäße Vorrichtung eignen sich insbesondere zur Schaffung von Transportsystemen von fahrerlosen eigen angetriebenen und eigen gesteuerten Fahrzeugen.

EP 0 417 665 A2

Liste der Bezugszeichen:

1,2 Fahrzeuge
3 Sende- und Empfangsoptik
4, 4′, 4″ Retroreflektoren
5, 5′, 5″ Abtastlichtstrahlen
6, 6′ Längsachsen der peilenden Fahrzeuge bzw. optische Achsen der Lichtquelle und der Empfangsoptik des peilenden Fahrzeugs
7 Drehrichtungspfeil des Abtastwinkels
8, 8′ Begrenzungsstrahlen des Abtastwinkels
9, 9′, 9″ Retroreflektoren
10, 11 Fahrzeuge
12 Winkelerfassungseinrichtung
13 Auswerte- und Recheneinrichtung
14, 14′ Geraden
15 Lichtquelle mit Empfangsoptik, Winkelerfassungseinrichtung und Auswerte- und Recheneinrichtung
F Fahrzeug
$X_F$, $Y_F$ Koordinaten des Fahrzeugs F
1 Längsachse des Fahrzeugs F
$R_1$, $R_2$, $R_3$ Retroreflektoren
$X_1$, $X_2$, $X_3$ Koordinaten der Retroreflektoren auf der x-Achse
d Abstand der Retroreflektoren voneinander
$b_1$, $b_2$, $b_3$ Längen der Abtaststrahlen
$\alpha$ Abtastwinkel
$\alpha_1$, $\alpha_2$, $\alpha_3$ momentane Abtastwinkel
$\beta_1$, $\beta_2$, $\beta_3$ Dreieckswinkel
$\gamma_1$ Differenzwinkel $\alpha_2 - \alpha_1$
$\gamma_2$ Differenzwinkel $\alpha_3 - \alpha_1$
$\Psi$ Fahrzeugwinkel des Fahrzeugs F
D1, D2, D3 Retroreflektoren

**Ansprüche**

1. Verfahren zur optischen Positions- und/oder Fahrtrichtungsbestimmung mindestens eines fahrerlosen eigen angetriebenen Fahrzeugs (F) in der x-y-Ebene, mit einer auf dem Fahrzeug montierten Sende- und Empfangsoptik (3) mit gemeinsamer optischer Achse zum Erzeugen eines gebündelten Abtaststrahls, vorzugsweise Lichtstrahl, und Empfangen des reflektierten Strahls, der von vom Fahrzeug getrennt angeordneten Retroreflektoren ($R_1$,$R_2$,$R_3$) auf die Empfangsoptik reflektiert wird und mit einer Auswerte- und Recheneinrichtung für die Verarbeitung der von der Empfangsoptik gelieferten elektrischen Signale, wobei die Sende- und Empfangsoptik in der x-y-Ebene synchron und zyklisch einen vorgegebenen Winkelbereich ($\alpha$) durchläuft und
a) der Abtaststrahl auf wenigstens drei Retroreflektoren ($R_1$,$R_2$,$R_3$) gelenkt wird, die auf einer Geraden liegen und deren Abstände (d) voneinander gleich und bekannt sind und deren Lage im x-y-Koordinatensystem festgelegt ist
b) mit der Empfangsoptik (3) die Erfassung der momentanen Abtastwinkel ($\alpha_1$,$\alpha_2$,$\alpha_3$) in bezug auf eine definierte Längsachse (1) des Fahrzeugs (F) zu den drei Retroreflektoren ($R_1$,$R_2$,$R_3$) erfolgt und
c) mit den momentanen Abtastwinkeln ($\alpha_1$,$\alpha_2$,$\alpha_3$) und den Abständen (d) der Retroreflektoren ($R_1$,$R_2$,$R_3$) voneinander die Entfernungen ($b_1$,$b_2$,$b_3$) der Empfangsoptik (3) von den Retroreflektoren errechnet werden, womit das durch die beiden äußeren Retroreflektoren ($R_1$,$R_3$) und die Sende- und Empfangsoptik (3) aufgespannte Dreieck berechnet werden kann und damit die Koordinaten ($X_F$, $Y_F$) des Fahrzeugs (F) bestimmt sind.
2. Verfahren nach Anspruch 1, dadurch gekennzeichnet,
daß zur Bestimmung der Orientierung der Längsachse (1) des Fahrzeugs (F) im Koordinatensystem einer der Winkel ($\beta_1$,$\beta_3$) des durch die beiden äußeren Retroreflektoren ($R_1$,$R_3$) und die Sende- und Empfangsoptik (3) aufgespannten Dreiecks unter Zuhilfenahme desjenigen zugeordneten momentanen Winkels ($\alpha_1$,$\alpha_3$) im Abtastwinkelbereich ($\alpha$) zu demjenigen der äußeren Retroreflektoren ($R_1$,$R_3$), dessen Winkel ($\beta_1$,$\beta_3$) bestimmt worden ist, berechnet wird, beispielsweise der Fahrzeugwinkel ($\Psi$) des Fahrzeugs (F), der

7

durch die Längsachse (1) des Fahrzeugs (F) und der x-Achse des Koordinatensystems aufgespannt wird.

3. Vorrichtung zur optischen Positions- und/oder Fahrtrichtungsbestimmung mindestens eines fahrerlosen eigen angetriebenen Fahrzeugs (F) in der x-y-Ebene, mit einer auf dem Fahrzeug montierten Sende- und Empfangsoptik (3) mit gemeinsamer optischer Achse zum Erzeugen eines gebündelten Abtaststrahls, vorzugsweise Lichtstrahl, und Empfangen des reflektierten Strahls, das von vom Fahrzeug getrennt angeordneten Retroreflektoren ($R_1, R_2, R_3$) auf die Empfangsoptik reflektiert wird und mit einer Auswerte- und Recheneinrichtung für die Verarbeitung der von der Empfangsoptik gelieferten elektrischen Signale, wobei die Sende- und Empfangsoptik in der x-y-Ebene synchron und zyklisch einen vorgegebenen Winkelbereich ($\alpha$) zu durchlaufen imstande ist, gekennzeichnet durch folgende Merkmale:

a) es sind drei Retroreflektoren ($R_1, R_2, R_3; 4, 4', 4''; 9, 9', 9''$), deren Lage in einem gegebenen x-y-Koordinatensystem bekannt bzw. berechenbar ist, vorhanden und dem Fahrzeug (F;1,2) zugeordnet, die voneinander gleiche und bekannte Abstände (d) haben und auf einer Geraden (14,14') angeordnet sind, die in der x-y-Ebene des Fahrzeugs liegt, wobei das x-y-Koordinatensystem sowohl als fest stehend oder dem sich bewegenden Fahrzeug fest zugeordnet ist

b) die Retroreflektoren ($R_1, R_2, R_3; 4, 4', 4''; 9, 9', 9''$) liegen innerhalb eines durch einen vorgegebenen Winkebereich ($\alpha$) aufgespannten Sektors, der vom Abtaststrahl der Sende- und Empfangsoptik (3) überstrichen wird,

c) die Sende- und Empfangsoptik (3) weist eine Winkelerfassungseinrichtung (12) für die Erfassung der momentanen Winkel ($\alpha_1, \alpha_2, \alpha_3$) des Winkelbereichs ($\alpha$) in bezug auf die Retroreflektoren ($R_1, R_2, R_3; 4, 4', 4''; 9, 9', 9''$) auf.

4. Vorrichtung zur optischen Positions- und/oder Fahrtrichtungsbestimmung von mindestens zwei fahrerlosen eigen angetriebenen Fahrzeugen (1,2) in der x-y-Ebene, mit einer auf jedem Fahrzeug montierten Sende- und Empfangsoptik (3) mit gemeinsamer optischer Achse zum Erzeugen eines gebündelten Abtaststrahls, vorzugsweise Lichtstrahl, und Empfangen des reflektierten Strahls, das von Retroreflektoren ($4, 4', 4''; 9, 9', 9''$) auf die Empfangsoptik reflektiert wird und mit einer Auswerte- und Recheneinrichtung für die Verarbeitung der von der Empfangsoptik gelieferten elektrischen Signale, wobei die Sende- und Empfangsoptik in der x-y-Ebene synchron und zyklisch einen vorgegebenen Winkelbereich ($\alpha$) zu durchlaufen imstande ist, nach Anspruch 3, dadurch gekennzeichnet, daß zur Bestimmung der Position und Richtung des einen Fahrzeugs (1,2) relativ zum anderen Fahrzeug (1,2) auf den Fahrzeugen (1,2) Retroreflektoren ($4, 4', 4''; 9, 9', 9''$) angeordnet sind.

5. Vorrichtung nach Anspruch 4, dadurch gekennzeichnet, daß die Retroreflektoren ($4, 4', 4''; 9, 9', 9''$) an jedem Fahrzeug (1,2) vorn und/oder hinten in gleichen Abständen und Positionen angeordnet sind.

Fig. 1

Fig. 2

Fig. 3